# EUROPEAN PATENT APPLICATION

(11) **EP 2 199 360 A1**
(43) Date of publication of application: **23.06.2010**
(21) Application number: 08254013.9
(22) Date of filing: 16.12.2008
(51) Int. Cl.: C09K 8/80, C09K 8/68

(54) **Aqueous carrier fluid**

(71) Applicant: BP Exploration Operating Company Limited, Sunbury on Thames Middlesex TW16 7BP (GB)
(72) Inventor: The designation of the inventor has not yet been filed
(74) Representative: Collins, Frances Mary

(57) **Abstract**

The present invention relates to a carrier fluid for the introduction of gravel into a wellbore and, in particular, provides an aqueous carrier fluid for the introduction of gravel into a wellbore said carrier fluid comprising:
1) Water,
2) 0 to 50% by weight of the total carrier fluid of one or more alkali metal or alkaline earth metal salts,
3) A shale inhibitor which is selected from one or more of amine polymers, amide polymers, imine polymers, quaternary ammonium salt containing polymers and polyalkylene glycols,
4) A polymeric fluid loss additive, preferably a starch compound,
5) One or more particulate bridging agents, being particulates being other than the gravel to be introduced into the well bore, and said particulates being sized according to the fracture and reservoir pore size characteristics of the wellbore, and, being removable from the well after the gravel placement job is finished,

and wherein said carrier fluid has a coefficient of friction lower than that of water.

## Description

The present invention relates to an aqueous carrier fluid for the introduction of gravel into a wellbore.

The introduction of "gravel packs" into drilled wellbores is well known. The gravel, which is in the form of a coarse sand or a ceramic material, acts as a filter to minimise particulate production and migration in production and injection wells in a hydrocarbon reservoir, particularly fine sand production. Such particulates can cause significant wear to completion screens and equipment, pipework, pumps, valves and other equipment used to extract hydrocarbons from a reservoir, as well as presenting the issue of handling large amounts of oily sand at the surface.

In general, the conventional method of gravel placement, known as the "water pack" or "circulating pack" method, involves introducing the gravel using a carrier fluid pumped into an area between a suitable screen placed in the wellbore and the formation itself. In relatively "stable" formations this can work well as the filter cake remains intact preventing fluid losses to the formation. However, many formations have natural or induced fractures, highly permeable zones or the filter cake can be disrupted which can lead to a loss of carrier fluid resulting in premature gravel deposition in the wellbore, which then blocks introduction of further gravel further down the wellbore. In addition many formations comprise clays or shale which can swell or collapse when exposed to the carrier fluid, again blocking further gravel placement. In all cases gravel blockage leads to the end of the job leaving a certain well interval not filled with gravel.

To prevent the above issues in such formations "alternate path devices" such as "shunt tubes" may be included into the completion design. The shunt tubes are pressure self-activated tools which allow the gravel carrier fluid to by-pass the fractures, highly permeable zones or unstable shales, by providing an alternative flow path for the carrier fluid flow past the blockages caused.

There is, however, a desire for an alternative circulating pack carrier fluid system for introduction of gravel into wellbores in formations prone to shale or clay swelling and collapsing, and/or having natural or induced fractures, or highly permeable zones or where filter cake has been disrupted, and which does not require use of alternating path devices.

It has now been found that this problem can be solved by selection of specific carrier fluids formulated according to the formation properties.

Thus, in a first aspect the present invention provides an aqueous carrier fluid for the introduction of gravel into a wellbore, said carrier fluid comprising:
1) Water,
2) 0 to 50% by weight of the total carrier fluid of one or more alkali metal or alkaline earth metal salts,
3) A shale inhibitor which is selected from one or more of amine polymers, amide polymers, imine polymers, quaternary ammonium salt containing polymers and polyalkylene glycols,
4) A polymeric fluid loss additive, preferably a starch compound,
5) One or more particulate bridging agents, being particulates being other than the gravel to be introduced into the well bore, and said particulates being sized according to the fracture and reservoir pore size characteristics of the wellbore, and being removable from the well after the gravel placement job is finished,
and wherein said carrier fluid has a coefficient of friction lower than that of water.

Suitably, the wellbore into which it is desired to introduce the aqueous carrier fluid/gravel may be a hydrocarbon production wellbore (an oil or gas well), an injection wellbore (for example, water or gas injection well), a water-producing wellbore, a gas storage wellbore or a geothermal wellbore.

The carrier fluid of the present invention is suitable for the introduction of gravel into a wellbore having shale-comprising formations, natural or induced fractures, highly permeable zones, filter cake disruption or combinations thereof. In particular, the carrier fluid is formulated to enable gravel packing of a wellbore whilst avoiding the use of alternate path devices. However, the carrier fluid of the present invention is not excluded from use in "alternate path" applications wherein it can still act to decrease the amount of shunt tubes activation and flow diversion occurring.

All of the individual components of the carrier fluid of the present invention are known in general terms. However, it has been found that when selecting the components for a carrier fluid for introduction of gravel into a wellbore having shale-comprising formations, natural or induced fractures, highly permeable zones, filter cake disruption or combinations thereof, it is necessary to select a formulation having a specific combination of components according to the present invention.

For example, although both polymeric fluid loss compounds and particulates other than the gravel are known to be used in wellbore fluids for reducing fluid loss, it has been found that neither is particularly effective when used alone for introduction of gravel into a wellbore having shale-comprising formations, natural or induced fractures, highly permeable zones, filter cake disruption or combinations thereof, but a significant and surprising synergy is obtained when they are used together.

Similarly, a number of different types of shale inhibitor are known in the art. However, many of those often considered as suitable more generically have been found to be relatively poor in performance when used in the carrier fluid of the present invention for the introduction of gravel into a wellbore having shale-comprising formations and fractures.

The carrier fluid is an aqueous carrier fluid. By "aqueous" is meant that the predominant phase ("base fluid") of the carrier fluid is water. Minor amounts of hydrocarbon may be dispersed in the water, for example an oil-in-water emulsion, but preferably the carrier fluid does not comprise any hydrocarbons other than additives specifically added thereto which happen to be hydrocarbons.

Water from any suitable source may be used, including pure water, drill water, seawater and produced water.

The preferred carrier fluid comprises 1 to 50% by weight of the total carrier fluid composition of one or more alkali metal or alkaline earth metal salts.

The one or more alkali metal or alkaline earth metal salts should be water-soluble salts.

Suitable salts include NaCl, NaBr, KCl, CaCl₂, KBr, NaNO₃, CaBr₂, ZnBr₂, HCOONa, HCOOK, HCOOCs, K₂SO₄, MgCl₂, CH₃COOK, CH₃COONa, CH₃COOCs, Na₂CO₃, K₂CO₃ and mixtures thereof. The preferred salts are halide salts, especially chloride and bromide salts. The most preferred salts are NaCl, NaBr, KCl, CaCl₂ and mixtures thereof, for example a mixture NaBr and NaCl.

The salts are added such that the carrier fluid has a density corresponding to the formation pressure in the wellbore for the well control purposes. Examples of suitable compositions which might be used depending on the downhole pressure are as follows (SG = Specific Gravity):

| Composition (in water) |
|---|
| |
| 1.05 SG KCl |
| 1.20 SG NaCl |
| 1.35 SG NaBr |
| 1.30 SG CaCl₂ |
| 1.35 SG NaCl/NaBr |

There is also used in the carrier fluid according to the present invention a shale inhibitor which is selected from one or more of amine polymers, amide polymers, imine polymers, quaternary ammonium salt containing polymers and polyalkylene glycols. Particularly preferred compounds are N-containing polymers selected from:
(A) polyalkyleneamines,
(B) polyalkyleneimines,
(C) amine terminated compounds of general formula H₂N-R-(OR)ₓ-NH₂; where R is a C2 to C6 alkyl group, and x is from 1 to 20,
(D) polyvinylamines,
(E) polyvinylamides,
(F) condensation polymers of polyamines with epichlorohydrin,
(G) cationic polyacrylamides, and
(H) polyquaternary ammonium polymers,
and derivatives thereof.

With respect to polyalkyleneamines (A), typical compounds are polyethyleneamines, polypropylene amines and polyalkyleneamine acid complexes.

Similarly, with respect to polyalkyleneimines (B), a typical compound is polyethyleneimine.

With respect to (C), preferably R is an ethyl, propyl or butyl group, such as H₂N-CH(CH₃)CH₂-{OCH₂CH(CH₃)-}ₓ-NH₂. Preferably x is less than 15. x is more preferably from 1 to 5, for example 2.6 (averaged across all molecules).

With respect to polyvinylamines (D), typical compounds are homopolymers or copolymers prepared from vinyl amide monomers, such as N-vinylacetamide and N-vinyl formamide which can be subsequently hydrolysed to produce vinylamine -containing polymers.

With respect to polyvinylamides (E), a typical compound is polyvinylpyrrolidone.

With respect to (F) typical polyamines are produced by the reaction of epichlorhydrin with one or more of ethylenediamine, propylenediamine and butylenediamine.

With respect to (G), typical cationic polyacrylamides are polyacrylamides grafted with quaternary ammonium groups.

With respect to (H) typical polyquaternary ammonium polymers are homopolymers or copolymers of a polymer including 100% of a cationic monomer selected from (a) dimethyl diallyl ammonium chloride (DMDAAC) having the formula [CH₂=CH-CH₂]₂N⁺(CH₃)Cl⁻, (b) an acryloyloxy monomer of the formula CH₂=CR-COR¹N(CH₃)₃, or (c) an acrylamido monomer of the formula CH₂=CR-CONR¹N(CH₃)₃, where R is hydrogen or methyl group, and R¹ is a connecting linear or branched saturated hydrocarbyl group having one to about five carbon atoms. The cationic monomers may be optionally copolymerized with acrylic acid, methacrylic acid, or a monomer of a formula CH₂=C(R)-C(O)-NH-R¹-SO₃⁻ A⁻, where R and R¹ are as above and A⁻ is an anion selected from chloride and methosulfate. Among the anionic comonomers are acrylic acid, 2-acrylamido-2-methyl propyl sulfonic acid (AMPS), and methacrylic acid. Other cationic monomers in addition to DMDAAC include methylacryloxy ethyl trimethyl ammonium methosulfate (METAMS), acryloxy ethyl trimethyl ammonium methosulfate (AETAMS), methylacryloxy ethyl trimethyl ammonium chloride (METAC), acryloxy ethyl trimethyl ammonium chloride (AETAC), methyl acrylamidopropyl trimethyl ammonium chloride (MAPTAC), and 3-acrylomido-3-butyl trimethyl ammonium chloride (AMBTAC).

By derivatives of the above is meant compounds based on the same polymer backbone but which have been substituted at one or more of the hydrogen atoms therein.

In general the average molecular weight of the polymer used as shale inhibitor is from 500 to 50,000, preferably from 500 to 20,000.

Most preferred compounds are amine terminated compounds of general formula H₂N-R-(OR)ₓ-NH₂; where R is a ethylene or propylene, and x is from 1 to 5, polyvinylamides and polyalkyleneamine acid complexes.

Other suitable shale inhibitors include polyalkylene glycols. However, whilst potentially useful in some applications, these have been found to be generally of lower efficiency in comparison with the best amine terminated compounds, polyvinylamides and polyalkyleneamine acid complexes. With respect to polyalkylene glycols, typical examples are butoxy polyethylene polypropylene glycol and polyethylene glycol butyl ether.

Typically the shale inhibitor is used in an amount of from 0.1 to 10% by weight of the carrier fluid composition, preferably in the range 1 to 5% by weight.

The carrier fluid of the present invention also includes a polymeric fluid loss additive. Preferably the polymeric fluid loss additive is a starch compound.

Suitable starches which can be used for this invention belong to the family of pregelatinized starches. The preferred starch is potato starch. Non-limiting examples of other starches that may be used include corn starch, wheat starch, cassava starch, sorghum starch, tapioca starch, arrowroot starch, sago starch, maize starch, GM starches and rice starch. The starch may be a modified starch, for example, hydroxypropyl starch, hydroxyethyl starch, carboxymethyl starch, quaternaryammonium starch.

The polymeric fluid loss additive may be modified with a bactericide. For example, starch may be modified with 0.5 to 1% by weight of a bactericide, such as sodium dichlorophen. The bactericide prevents the starch from being digested by bacteria present.

The polymeric fluid loss additive may be cross-linked. For example, starch may be cross-linked using epichlorohydrin.

Starch is preferred as a fluid loss agent as it minimizes formation damage (can easily be degraded by acid / enzyme / oxidizer treatments). Starches do not suspend the gravel. Starches form a thin gel and don't result in the carrier fluid having a high viscosity.

Amongst non-starch polymers that may be used as the polymeric fluid loss additive there may be mentioned water-soluble low molecular weight celluloses, such as polyanionic cellulose (PAC), low molecular weight hydroxyethyl cellulose (HEC), carboxymethyl cellulose (CMC), carboxymethylhydroxyethyl cellulose, sulphoethylcellulose.

In general the average molecular weight of the polymeric fluid loss additive is from 100,000 to 10,000,000, preferably from 100,000 to 2,000,000.

Typically the polymeric fluid loss additive is used in an amount of from 0.1 to 5.0% by weight of the carrier fluid composition, preferably in the range 0.5 to 2.0% by weight.

The carrier fluid of the present invention also includes one or more particulate bridging agents, being particulates other than the gravel to be introduced into the well bore. Said particulates are also sized according to the fracture and reservoir pore size characteristics of the wellbore, and are removable from the well after the gravel placement job is finished.

The particulates are deposited as a layer of particles, known as a "filter cake" on the walls of the wellbore. The "filter cake" has relatively low permeability compared to the fractures and highly permeable zones present, and hence acts to reduce the loss of the carrier fluid into the surrounding rock formation. The filter cake will also comprise the polymeric fluid loss additive and other solids, such as the gravel, present in the carrier fluid.

Suitable particulate bridging agents should generally be insoluble or only sparingly soluble in the carrier fluid such that they stay in particulate form and in proper particle size distribution in the fluid. The particulates should also not plug the gravel screen. Removal of the particulate bridging agents should be easily achieved to minimise any possible formation damage during their removal. Most suitable particulate bridging agents are CaCO₃ particularly in the form of ground marble, salt particles which have been optionally treated (coated) to prevent them dissolving in the aqueous carrier fluid, melamine particles and lithium carbonate particles and oil-soluble crystalline particles that do not swell in oil (but when oil is produced from the formation, the particles will dissolve).

With particular regards to the use of salt particles, salt particles may be used in salt-saturated carrier fluids, because they are insoluble therein even if they are soluble in diluted brines or freshwater. A particular example of such a salt-saturated carrier fluid would be 1.20 SG NaCl brine at 21°C.

After use of the carrier fluid of the present invention, as much as possible of the filter cake should be removed before commencing production of fluids from the hydrocarbon formation or injecting fluids into formation. Thus, the one or more particulate bridging agents must be removable from the well after the gravel placement job is finished. Typically, the particulates are removable by contact with a fluid capable of removing the particulates by dissolution therein, known as a "clean-up" fluid. For example, a filter cake consisting of sized salt water soluble particles may be cleaned-up with diluted brine or freshwater treatment, whereas filter cake consisting of oil soluble crystalline particles may be cleaned-up with an oil-based fluid.

Alternatively, use of a separate clean-up fluid can be avoided in some situations and the filter cake may be removed by putting the well into production or injection, and relying on the hydrocarbon or water co-produced with the hydrocarbons or water injected into the well to remove the filter cake.

A "breaker", which is an agent which aids or causes dissolution, may be used. For example, a filter cake consisting of ground marble particulates or similar can be dissolved by use of a clean-up fluid which is an aqueous solution of acid, preferably aqueous solution of weak acid or a precursor of weak acid. Suitable weak acids are selected from the group consisting of formic acid, citric acid, acetic acid, lactic acid, glycolic acid, succinic acid, and acidic sequestrants such as those based upon partially neutralized ethylenediaminetetracetic acid (EDTA). Suitable precursors of weak acids are materials that are capable of hydrolyzing to produce weak acids, such as polyglycolic or polylactic homopolyesters and orthoesters such as orthoformate esters. Inorganic acids (e.g. HCl) and chelating agents may also be used.

The breaker may be delayed release, in which case it may be possible to incorporate the breaker in the carrier fluid.

Preferably, however, the breaker is introduced in the clean-up fluid after use of the carrier fluid of the present invention. For example, a clean-up fluid may comprise weak acid or acid precursor in the amount of between 1% and 20% by weight. Acid, weak acid and acid precursor may be retarded to slow down the action even when provided as a separate clean-up fluid.

Starch may also be broken by the acids. Alternative breakers that may be suitable for starch or other polymeric fluid loss additives may include enzymes (e.g. alpha-amylase enzyme) and oxidizers (e.g. hydrogen peroxide, persulfate salts).

Typically, the clean-up solution (breaker) is to be left to soak for about 2 to 48 hrs. In general, the operator will be able to determine a sufficient period of time has elapsed when the fluid loss from the wellbore to formation increases.

The particulates "being sized" means that the particle size distribution of the particulates is selected based on the fracture and reservoir pores size characteristics of the hydrocarbon formation, and in particular by the size of any fractures and by the pore throat size of the formation. Typically, the particle size distribution is in the range of from about 1 micron to about 10 mm, preferably 2 microns to about 0.5 mm.

Generally the particulates are present in the carrier fluid in an amount sufficient to deposit a filter cake on the walls of the wellbore that provides the desired level of fluid loss control.

By being deposited "on the walls of the wellbore" is meant that filter cake may be deposited in any cracks, fractures, fissures, caves or vugs that are present in the walls of the wellbore, along with the formation face itself.

Typically, the particulates are present in the fluid in an amount in the range of 1 to 35% by weight, preferably 2 to 25% by weight, more preferably 3 to 15% by weight, in particular 3 to 5% by weight.

More than one particulate bridging agent may be employed.

The carrier fluid of the present invention is a high lubricity water or brine based fluid and, in particular, has a coefficient of friction lower than that of water. Preferably the carrier fluid has a lubricity coefficient less than 0.34 as measured with a portable Fann EP/Lubricity Tester Model 212. In general, this is achieved by the carrier fluid of the present invention without addition of further additives, and any further additives that are used should not increase the lubricity coefficient above the desired range.

When used in "alternate path" packs applications a still lower coefficient of friction may be preferred.

For "circulating packs" the carrier fluid exhibits drag reducing characteristics during gravel pack placement. This is achieved as a direct result of low fluid viscosity and low friction nature of the fluid (with the fluid lubricity coefficient being less than the one for water).

However, for both "circulating packs" and "alternate path" carrier fluids extra lubricants may be added into the fluid for extra friction reduction, provided that these lubricants do not compromise the carrier fluid properties and do not cause extra formation damage. Lubricants may be added in an amount of from 0.1 to 10% by weight of the carrier fluid composition, preferably in the range 1 to 5% by weight.

The carrier fluid for "circulating packs" preferably has low viscosity, similar to the viscosity of water, and preferably with the following viscosity parameters: PV (Plastic Viscosity) should be less than 5 cP (5 mPa s) and YP (Yield Point) should be less than 5 lbs/100 ft² (2.4 Pa), when measuring both at 20°C with the Fann Model 35 Couette coaxial cylinder rotational viscometer in configuration R1-B1. During "circulating packs" lower concentration of gravel is added and gravel is kept in suspension due to the turbulence during pumping.

However, in some applications it may be desired to alter the viscosity of the carrier fluid by use of suitable viscosity-modifying additives. In particular, carrier fluid for "alternate path" applications will preferably have higher viscosity in comparison with the carrier fluid for "circulating packs" to suspend higher amounts of gravel and to activate shunt tubes. A wide range of water-soluble polymers are known to alter viscous properties and solids suspension. Suitable water soluble polymers include:
a) high molecular weight celluloses: polyanionic cellulose (PAC), hydroxyethyl cellulose (HEC), carboxymethyl cellulose (CMC), carboxymethylhydroxyethyl cellulose, sulphoethylcellulose;
b) bacterial gums: xanthan, welan, diutan, succinoglycan, scleroglucan, dextran, pullulan;
c) plant derived gums such as guar and locust-bean gums and their derivatives; and
d) synthetic polymers and copolymers derived from any suitable monomers.

Rheological control (for example gelling properties) can also be provided to the aqueous based carrier fluid by adding clays and/or other inorganic fine particles. Examples include bentonite, montmorillonite, hectorite, attapulgite, sepiolite, Laponite^{™} (ex Laporte) and mixed metal hydroxides.

Rheological control can also be provided to the aqueous based carrier fluid by adding of visco-elastic surfactants (VES) and co-surfactants. VES examples include betaines. Co-surfactants examples include dodecylbenzene sulfonate and trisodium hydroxyethylethylenediamine triacetate. The preferred VES surfactant concentration range is from about 5 to about 15 volume %. VES are known to break with time under downhole temperatures and/or under contact with hydrocarbons. Breaking here means that the fluid loses its viscosity resulting into a thin water-like fluid.

In use the carrier fluid will also contain gravel particulates. Typically, the particle size distribution of the gravel is in the range of from 150 to 3000 microns, preferably 200 to 2900 microns, in particular 300 to 2700 microns.

Typically, the gravel particulates are present in the carrier fluid in an amount in the range of 1 to 70% by weight (of the total weight of gravel and carrier fluid), preferably 2 to 50% by weight, in particular, 30 to 50% by weight (in gravel carrier fluid for "alternate path" packs), in particular 3 to 10% by weight (in gravel carrier fluid for circulating packs).

In a further embodiment, the present invention provides a process for the introduction of gravel into a wellbore having shale-comprising formations, natural or induced fractures, highly permeable zones, filter cake disruption or combinations thereof, which process comprises introducing an aqueous carrier fluid as defined herein and said gravel into the formation.

The carrier fluid of the present invention preferably has a pH in the range of 8 to 11, most preferably in the range 8.5 to 10. A pH control agent may be added to carrier fluid in order to obtain the optimum pH for a particular formulation. Suitable pH control agents are alkaline compounds which do not cause precipitation, and include alkali metal and alkaline earth metal hydroxides such as NaOH, KOH, Ca(OH)₂ and Mg(OH)₂, most preferably NaOH.

As noted above, the alkali metal or alkaline earth metal salts in the carrier fluid of the present invention may be added such that the carrier fluid has a density corresponding to the formation pressure in the wellbore. The one or more alkali metal or alkaline earth metal salts added to the carrier fluid of the present invention may be used as the sole or major component for setting the density of the solution. Alternatively, density control may be provided to the water-based gravel carrier fluid using insoluble weighting agents. Suitable weighting agents include suspended mineral particles such as ground barites, iron oxides (for example, haematite), ilmenite, calcite, magnesite (MgCO₃), dolomite, olivine, siderite, manganese oxides (for example hausmannite , Mn₃O₄) or suspended metal particles. Any such particulates introduced into the gravel pack carrier fluid should not plug the gravel screen.

Additional additives can be added for improving the performance of the gravel pack carrier fluid, provided they do not compromise the gravel pack carrier fluid properties. These include but are not limited to, scale inhibitors, bactericides, surfactants, foaming and defoaming agents, solid and liquid lubricants, thinners (such as lignosulfonates), oxygen scavengers, H₂S and CO₂ scavengers, water hardness control chemicals, corrosion inhibitors, gas-hydrate inhibitors, demulsifiers and surfactants designed to assist the clean-up of invaded fluid from the reservoir, and combinations thereof.

As is known in the art, the aqueous carrier fluid should be compatible with the reservoir, by which is meant that none of the components (chemicals and particulates) introduced in the carrier fluid should cause significant damage to the reservoir. In general, the operator will be able to determine a maximum level of formation damage which may be tolerated without losing significantly well production or injection.

Many components of the carrier fluid can be selected independently of the alkali metal content, and hence of the downhole formation pressure in which the carrier solution is to be used. For example, although the particulates used may be sized depending on the formation properties, the specific material is not especially dependent on the salt content of the carrier fluid (with the exception that sized salts require carrier fluid salt-saturation to prevent the sized salt particulates from dissolution and changes in their particle size distribution).

Further, certain shale inhibitors have been found to be broadly effective across a number of different possible applications. In particular, acid amine complexes have been found to be broadly effective across alkali metal or alkaline earth metal contents from 0% to 50% by weight.

In a most preferred aspect of the present invention, however, the specific carrier fluid components to be used, and especially the shale inhibitor and fluid loss control polymer (starch), are selected depending on the amount and chemical nature of salt component used, and hence also for a particular formation pressure. Thus, although, as noted above, acid amine complexes have been found to be broadly effective, in specific applications other components have been found to be optimum.

In particular, it has been found that polyvinylamides, such as polyvinylpyrrolidone and its derivatives, are particularly effective in "low" salt content (i.e. low density) applications, by which is meant carrier solutions with less than 5% by weight of alkali or alkaline earth metal salt.

In contrast, when applied to higher salt content carrier solution i.e. higher density applications, by which is meant with more than 5% by weight of alkali or alkaline earth metal salt, amine terminated compounds of general formula H₂N-R-(OR)ₓ-NH₂; where R is a ethylene or propylene, and x is from 1 to 5 have been found to be superior.

In all cases, even though polyalkylene glycols can provide adequate shale inhibition in certain brines, the best components according to the present invention have been found to be of better performance in comparison with polyalkylene glycols.

In a preferred aspect, the polymeric fluid loss additive, and in particular the type of starch to be used, may also be selected based on the application, although it has been found that the combination of a polymeric fluid loss additive with the particulates is most important to obtain sufficient fluid loss characteristics.

The carrier fluid of the present invention results in the possibility to perform "circulating pack" gravel placement operations in the complicated wells, such as high angle, extended reach, wells with unstable swelling and collapsing shales, or natural or induced fractures, or highly permeable zones, or filter cake disruption or combinations thereof. Without such a fluid the described wells would need to be completed with "alternate path" packs or would be completed with another completion type.

The carrier fluid of the present invention is not excluded from use in "alternate path" applications wherein it can still act to decrease the amount of shunt tubes activation and flow diversion occurring.

The carrier fluid is introduced into the wellbore at above the pore pressure of the formation in order to facilitate the deposition of the filter cake of the particulate bridging agent, preferably at least 1 MPa above the pore pressure.

The present invention will now be illustrated by the following Examples.

### Examples

A series of carrier fluids have been formulated and tested for shale inhibition, lubricity, filtration, lost circulation control and post-job filter cake clean-up. The fluid formulation for each series of tests depended on the fluid characteristic to test. The test procedures and results are shown below.

Table 1 specifies the chemicals used for the carrier fluid development:

**Table 1**

| | Product Description |
|---|---|
| Shale Inhibitors | |
| Shale Inhibitor 1 | Polyvinylpyrrolidone Derivative |
| Shale Inhibitor 2 | Amine Terminated Polyalkylene Glycol |
| Shale Inhibitor 3 | Polyalkyleneamine Acid Complex |
| Shale Inhibitor 4 | Ethoxylated Polyamine |
| Shale Inhibitor 5 | Polyalkylene Glycol |
| Shale Inhibitor 6 | Polyalkylene Glycol |
| Shale Inhibitor 7 | Alkyl Ammonium Derivative |
| | |

| Polymeric fluid loss additive | |
|---|---|
| Starch 1 | Starch |
| Starch 2 | Derivatized Starch |
| Starch 3 | Biocide-treated Starch |
| | (0.5 wt% Biocide - Sodium Dichlorophen) |

Table 2 lists the base fluids used as either freshwater or salt-containing fluid to produce carrier fluids of different density (specific gravity) for the tests below. The table also lists the base fluids formulations to build 1 Litre of fluid (if mixed from pure salts at 21°C):

**Table 2**

| Specific gravity | Salt used | Fluid Formulation (at 21°C) |
|---|---|---|
| | | |
| 1.00 | None (freshwater) | Freshwater |
| 1.02 | KCl | 33 g KCl; 986 ml water |
| 1.20 | NaCl | 311 g NaCl; 888 ml water |
| 1.35 | NaBr | 480 g NaBr; 870 ml water |
| 1.30 | CaCl₂ | 401.2 g CaCl₂; 891 ml water |
| 1.35 | NaCl/NaBr | 170 g NaCl; 335 g NaBr; 847 ml water |

### A) Shale dispersion (bottle rolling) tests.

The fluids were prepared from the base fluids listed in Table 2. To each of the fluids has been added a selection of shale inhibitors for shale dispersion tests, and at varying concentrations. Where necessary, sodium hydroxide was added to keep pH above 8.5.

Shale dispersion tests were performed with London clay (19.91 - 21.42% moisture content). London clay is known to be the most reactive clay and is widely used for lab evaluation of shale inhibitors. 2 - 4 mm shale chips were prepared from London clay, weighed and exposed for 16 hours at room temperature to the formulated carrier fluids in a roller oven at 20 RPM. The dry weight of clay chips after the test was measured, and the shale recovery was calculated as a percentage of the original weight, taking into account the moisture content in the shale before bottle-rolling. Higher values indicate the most effective shale stabilisation. Repetitive tests have been carried out with the top performing shale inhibitors: for 16 hrs (room temperature) repetitive and for 24 hrs at more aggressive conditions (70°C).

The following Table 3 lists the best shale dispersion (bottle rolling) test results achieved for each base fluid, and relative to the absence of a shale inhibitor:

**Table 3**

| Shale Inhibitor | 16 hrs, room temp | 16 hrs, room temp repetitive | 24 hrs, 70°C |
|---|---|---|---|
| | 1.00 SG Freshwater | | |
| - (None) | 1.78 | | |
| 3% Shale Inhibitor 1 | 95.32 | 86.87 | 86.95 |
| | | | |
| | 1.02 SG (3%) KCl | | |
| - (None) | 2.97 | | |
| 3% Shale Inhibitor 1 | 94.47 | 90.38 | 88.89 |
| | | | |
| | 1.20 SG NaCl | | |
| - (None) | 6.39 | | |
| 3% Shale Inhibitor 2 | 98.85 | 96.68 | 68.56 |
| | | | |
| | 1.30 SG CaCl₂ | | |
| - (None) | 7.77 | | |
| 3% Shale Inhibitor 3 | 96.41 | 91.16 | 64.24 |
| | | | |
| | 1.35 SG NaCl/NaBr | | |
| - (None) | 10.54 | | |
| 1% Shale Inhibitor 2 | 101.03 | 98.24 | 77.82 |
| | | | |
| | 1.35 SG NaBr | | |
| - (None) | 8.42 | | |
| 3% Shale Inhibitor 2 | 99.44 | 99.09 | 74.59 |

The shales dispersion test results proposed the following shale inhibitors to be the most effective:
1) 3% Shale Inhibitor 1 - for 1.00 SG freshwater and 1.02 SG (3%) KCl brine
2) 3% Shale Inhibitor 2 - for 1.20 SG NaCl and 1.35 SG NaBr brines
3) 3% Shale Inhibitor 3 - for 1.30 SG CaCl₂ brine
4) 1% Shale Inhibitor 2 - for 1.35 SG NaCl/NaBr brine

Also, 3% Shale Inhibitor 3 was proved to be of fairly good performance for all the brines studied.

### B) Lubricity tests

The carrier fluids were prepared from the base fluids listed in Table 2. To each of the fluids has been added a selection of shale inhibitors for lubricity tests, and at varying concentrations. Lubricity coefficients have been then measured using portable Fann EP/Lubricity Tester Model 212. Lower lubricity coefficient values indicate the higher friction reduction properties of the fluid.

The results are presented in Table 4.

**Table 4**

| Completion Fluid | Shale Inhibitor | Lubricity Coefficient |
|---|---|---|
| 1.00 SG Freshwater | - | 0.34 |
| | 3% Shale Inhibitor 3 | 0.26 |
| | 3% Shale Inhibitor 1 | 0.32 |
| | | |
| 1.02 SG (3%) KCl | - | 0.26-0.33 |
| | 3% Shale Inhibitor 3 | 0.27 |
| | 3% Shale Inhibitor 1 | 0.26 |
| | | |
| 1.35 SG NaBr | - | 0.23-0.24 |
| | 3% Shale Inhibitor 3 | 0.22 |
| | 3% Shale Inhibitor 2 | 0.20 |
| | | |
| 1.20 SG NaCl | - | 0.22-0.24 |
| | 3% Shale Inhibitor 2 | 0.18 |
| | 3% Shale Inhibitor 3 | 0.22 |
| | | |
| 1.30 SG CaCl₂ | - | 0.14-0.16 |
| | 3% Shale Inhibitor 3 | 0.21 |
| | | |
| 1.35 SG NaCl/NaBr | - | 0.19-0.23 |
| | 3% Shale Inhibitor 3 | 0.22 |
| | 1 % Shale Inhibitor 2 | 0.21 |

The lubricity tests indicated the carrier fluid lubricative properties to be in general higher in the brines with additions of shale inhibitors in comparison with freshwater and brines alone, thus demonstrating that extra lubricant additions were not necessary.

### C) Filtration Tests

Different starches as polymeric fluid loss additives have been evaluated in all of the carrier fluids. Each fluid was prepared from the base fluids listed in Table 2, with addition of a starch. Where necessary, sodium hydroxide was added to keep pH above 8.5 before adding 7.0 kg/m³ of starch. A standard LTLP filter-press was used for the tests. The tests were carried out under room temperature with 3.5 inch filter paper as filtering media. 100 psi pressure was applied and filtrate was collected during 30 min. The results from the best performing starches for each fluid are presented in Table 5:

**Table 5**

| Polymers | Filtrate Volume, ml | | | |
|---|---|---|---|---|
| | 1 min | 7.5 min | 15 min | 30 min |
| | 1.20 SG NaCl Brine | | | |
| Starch 1 | 10.0 | 17.0 | 20.0 | 23.0 |
| | 1.30 SG CaCl₂ Brine | | | |
| Starch 3 | 8.0 | 15.5 | 17.5 | 19.5 |
| | 1.35 SG NaBr Brine | | | |
| Starch 2 | 2.0 | 5.6 | 7.8 | 11.2 |
| | 1.35 SG NaCl/NaBr Brine | | | |
| Starch 1 | 7.0 | 11.0 | 13.0 | 15.5 |
| | 1.02 SG (3%) KCl | | | |
| Starch 2 | 12.0 | 33.5 | 47.0 | 64.5 |
| | 1.00 SG Freshwater | | | |
| Starch 2 | 8.0 | 21.0 | 31.0 | 56.0 |

All the polymers showed higher filtrate volumes in 1.02 SG (3%) KCl and 1.00 SG freshwater fluids, however Starch 2 performed twice better than other polymers.

### D) Lost Circulation Control Tests

Lost circulation control tests have been performed on ceramic discs for certain formulations. As a comparative test, freshwater was flowed through a filtration test cell with gravel and gravel pack screen in place, and with starch or CaCO₃ addition. These tests indicated that gravel, starch or CaCO₃ alone would not reduce filtration rates (in these tests ceramic disc simulated formation face, CaCO₃ was mixed with gravel and starch was mixed into the freshwater).

Then further tests have been performed with the best starch-brine formulations on the heavy density fluids. Starch was added as a polymeric fluid loss additive into the corresponding base fluid. Where necessary pH was adjusted to above 8.5 using NaOH. Calcium carbonate as a particulate bridging agent (ground marble of different particle size), was mixed with Carbolite 20/40 gravel and placed on top of porous ceramic disc, using ceramic discs of varying pore size for different formulations. A gravel pack screen was placed on top of gravel, and the carrier fluid formulations were then flowed through the test cell at a temperature of 60°C and a pressure of 1.38MPa. The results are presented in Table 6:

**Table 6**

| Test No | Disc Size, mcm | Brine Type | Starch Conc, kg/m³ | CaCO₃ Cone, kg/m³ | Breakthrough Time |
|---|---|---|---|---|---|
| 1 | 10 | Freshwater | - | - | 12 s for 500 g |
| 2 | 10 | Freshwater | 10.0 Starch 1 | - | 38 s for 430 g |
| 3 | 10 | Freshwater | - | 50.0 | 38 s for 500 g |
| 4 | 35 | 1.30 SG CaCl₂ | 10.0 Starch 3 | 50.0 | 30 min-379.6 g |
| | | Brine | | | |
| 5 | 90 | 1.35 SG NaBr | 10.0 Starch 2 | 50.0 | 30 min-300.5 g |
| | | Brine | | | |
| 6 | 10 | 1.35 SG | 10.0 Starch 1 | | 30 min-228.6 |
| | | NaCl/NaBr | | 50.0 | |
| | | Brine | | | |

### E) Filter Cake Clean-Up Tests

Filter cake clean-up tests have been performed on the formulations 4 - 6 from Table 6. Simple breaker (10% HCl in water) was used to demonstrate easy and quick clean-up of the filter cake. 700 ml of breaker were placed carefully on top of gravel pack screen without disturbing gravel and filter cake. The breaker fluid was heated up to 60°C before 1.38MPa pressure was applied. The results are presented in Table 7:

**Table 7**

| Test No | Disc Size, mcm | Brine Type | Starch Conc, kg/m³ | CaCO₃ Conc, kg/m³ | Breaker Fluid Breakthrough Time |
|---|---|---|---|---|---|
| 4 | 35 | 1.30 SG | 10.0 Starch 3 | 50.0 | Immediate |
| | | CaCl₂ | | | breakthrough, breaker |
| | | Brine | | | flowed out in 40 s |
| 5 | 90 | 1.35 SG | 10.0 Starch 2 | 50.0 | Breakthrough in 2 |
| | | NaBr | | | min, breaker flowed |
| | | Brine | | | out in 7 min |
| 6 | 10 | 1.35 SG | 10.0 Starch 1 | | Breakthrough in 20 s, |
| | | NaCl/NaBr | | 50.0 | breaker flowed out in |
| | | Brine | | | 9.5 min |

### Summary of Results

The following formulations have been found to be particular effective for carrier fluids of the particular specific gravities:

### Example Formulation 1: Freshwater Fluid (1.035 SG)

| Product | Wt% |
|---|---|
| Drillwater | 91 |
| Starch 2 | 1 |
| CaCO₃ Bridging Package | 4.8 |
| NaOH | 0.1 |
| Shale Inhibitor 1 | 3 |

This formulation has been found to provide the best performance among 1.035 SG "freshwater fluid" formulations tested. In particular, during shale dispersion tests using Shale Inhibitor 1, 86 - 95% recovery was obtained at room temperature and 87% at 70°C. In contrast, "freshwater" alone resulted in less than 5% recovery at room temperature. In filtration tests Starch 2 performed the best in carrier fluid filtrate reduction in comparison with other starches evaluated.

### Example Formulation 2: 1.05 SG KCl Fluid

| Product | Wt% |
|---|---|
| Drillwater | 88.5 |
| KCl | 2.8 |
| Starch 2 | 0.9 |
| CaCO₃ Bridging Package | 4.7 |
| NaOH | 0.09 |
| Shale Inhibitor 1 | 2.9 |

This formulation has been found to provide the best performance among 1.05 SG KCl formulations tested. In particular, during shale dispersion tests using Shale Inhibitor 1, 90 - 94% recovery was obtained at room temperature and over 88% at 70°C. In contrast, in the absence of shale inhibitor less than 5% recovery was obtained. In filtration tests Starch 2 performed best in carrier fluid filtrate reduction in comparison with other starches evaluated.

### Example Formulation 3: 1.20 SG NaCl Fluid

| Product | Wt% |
|---|---|
| Drillwater | 71 |
| NaCl | 21.3 |
| Starch 1 | 0.8 |
| CaCO₃ Bridging Package | 4.2 |
| NaOH | 0.08 |
| Shale Inhibitor 2 | 2.6 |

This formulation has been found to provide the best performance among 1.20 SG NaCl formulations tested. In particular, during shale dispersion tests using Shale Inhibitor 2, 96 - 98% recovery was obtained at room temperature and over 68% at 70°C. In contrast, in the absence of shale inhibitor less than 10% recovery was obtained. In filtration tests Starch 1 performed best in carrier fluid filtrate reduction in comparison with other starches evaluated.

### Example Formulation 4: 1.35 SG NaBr Fluid

| Product | Wt% |
|---|---|
| Drillwater | 61.4 |
| NaBr | 31.8 |
| Starch 2 | 0.7 |
| CaCO₃ Bridging Package | 3.7 |
| NaOH | 0.07 |
| Shale Inhibitor 2 | 2.3 |

This formulation has been found to provide the best performance among 1.35 SG NaBr formulations tested. In particular, during shale dispersion tests using Shale Inhibitor 2, above 99% recovery was obtained at room temperature and over 74% - at 70°C. In contrast, in the absence of shale inhibitor below 10% recovery was obtained. Shale Inhibitor 6 was also tested for shale dispersion and although relatively effective, resulting in recovery of above 83% at room temperature, was still inferior to the Shale Inhibitor 2 according to the present invention. Addition of 0.7 wt% of Starch 2 and 3.7 wt% of ground marble CaCO₃ particles of proper size resulted into perfect filtration control on 90 mcm ceramic disc - 300.5 g of fluid leaked during 30 min at 1.38 MPa pressure. Treatment with 10% HCl breaker resulted in breaker fluid breakthrough after 2 min with the whole 700 ml of breaker fluid flowing out in 7 min.

### Example Formulation 5: 1.30 SG CaCl₂ Fluid

| Product | Wt% |
|---|---|
| Drillwater | 65.8 |
| CaCl₂ (94 - 97%) | 27 |
| Starch 3 | 0.8 |
| CaCO₃ Bridging Package | 3.9 |
| NaOH | 0.08 |
| Shale Inhibitor 3 | 2.5 |

This formulation has been found to provide the best performance among 1.30 SG CaCl₂ formulations tested. In particular, during shale dispersion tests using Shale Inhibitor 3,91- 96% recovery was obtained at room temperature and over 64% at 70°C. In contrast, in the absence of shale inhibitor less than 10% recovery was obtained. A Shale Inhibitor 6 was also tested and although relatively effective, resulting in recovery of 88% at room temperature, was still inferior to the Shale Inhibitor 3 according to the present invention. Addition of 0.8 wt% of Starch 3 and 3.9 wt% of ground marble CaCO₃ particles of proper size resulted into good filtration control on 3 mcm ceramic disc - 379.6 g of fluid leaked during 30 min at 1.38 MPa pressure. Treatment with 10% HCl breaker resulted in immediate breaker fluid breakthrough with the whole 700 ml of breaker fluid flowing out in just 40 s.

### Example Formulation 6: 1.35 SG NaCl/NaBr Fluid

| Product | Wt% |
|---|---|
| Drillwater | 60.7 |
| NaCl | 13.2 |
| NaBr (95%) | 20.7 |
| Starch 1 | 0.7 |
| CaCO₃ Bridging Package | 3.7 |
| NaOH | 0.07 |
| Shale Inhibitor 2 | 0.8 |

This formulation has been found to provide the best performance among 1.35 SG NaCl/NaBr formulations tested. In particular, during shale dispersion tests using Shale Inhibitor 2, 98 -100% recovery was obtained at room temperature and over 77% at 70°C. In contrast, in the absence of shale inhibitor 10.5% recovery was obtained. Addition of 0.7 wt% of Starch 1 and 3.7 wt% of ground marble CaCO₃ particles of proper size resulted into excellent filtration control on 10 mcm ceramic disc - 228.6 g of fluid leaked during 30 min at 1.38 MPa pressure. Treatment with 10% HCl breaker resulted in breaker fluid breakthrough after just 20 seconds with the whole 700 ml of breaker fluid flowing out in 9.5 min.

The above results show that the formulations of the present invention provide on average above 90% recovery at room temperature and on average above 70% recovery at 70°C across a range of different carrier fluid densities. Two examples using Shale Inhibitor 6 (a polyalkylene glycol) exceeded 83% recovery at room temperature (in 1.30 SG CaCl₂ and 1.35 SG NaBr carrier fluids).

## Claims

1. An aqueous carrier fluid for the introduction of gravel into a wellbore, said carrier fluid comprising:
1) Water,
2) 0 to 50% by weight of the total carrier fluid of one or more alkali metal or alkaline earth metal salts,
3) A shale inhibitor which is selected from one or more of amine polymers, amide polymers, imine polymers, quaternary ammonium salt containing polymers and polyalkylene glycols,
4) A polymeric fluid loss additive, preferably a starch compound,
5) One or more particulate bridging agents, being particulates being other than the gravel to be introduced into the well bore, and said particulates being sized according to the fracture and reservoir pore size characteristics of the wellbore, and, being removable from the well after the gravel placement job is finished,
and wherein said carrier fluid has a coefficient of friction lower than that of water.

2. A carrier fluid according to claim 1 wherein the one or more alkali metal or alkaline earth metal salts are selected from NaCl, NaBr, KCI, CaCl₂ and mixtures thereof.

3. A carrier fluid according to claim 1 or claim 2 wherein the shale inhibitor is selected from one or more of:
(A) polyalkyleneamines,
(B) polyalkyleneimines,
(C) amine terminated compounds of general formula H₂N-R-(OR)ₓNH₂; where R is a C2 to C6 alkyl group, and x is from 1 to 20,
(D) polyvinylamines,
(E) polyvinylamides,
(F) condensation polymers of polyamines with epichlorohydrin,
(G) cationic polyacrylamides, and
(H) polyquaternary ammonium polymers,
and derivatives thereof.

4. A carrier fluid according to claim 3 wherein the shale inhibitor is selected from amine terminated compounds of general formula H₂N-R-(OR)ₓ-NH₂; where R is a ethylene or propylene, and x is from 1 to 5, polyvinylamides and polyalkyleneamine acid complexes.

5. A carrier fluid according to any one of the preceding claims wherein the polymeric fluid loss additive is a starch compound.

6. A carrier fluid according to claim 5 wherein the starch is selected from potato starch, corn starch, wheat starch, cassava starch, sorghum starch, tapioca starch, arrowroot starch, sago starch, maize starch, GM starches and rice starch.

7. A carrier fluid according to claim 5 or claim 6 wherein the starch is a modified starch.

8. A carrier fluid according to any one of the preceding claims wherein the particulate bridging agent is selected from CaCO₃, particularly in the form of ground marble, salt particles which have been optionally treated (coated) to prevent them dissolving in the aqueous carrier fluid, melamine particles, lithium carbonate particles and oil-soluble crystalline particles that do not swell in oil.

9. A carrier fluid according to any one of the preceding claims wherein the particle size distribution of the particulate bridging agent is in the range of from 1 micron to 10 mm, preferably 2 microns to 0.5 mm.

10. A carrier fluid according to any one of the preceding claims wherein the carrier fluid has a lubricity coefficient less than 0.34.

11. A carrier fluid according to any one of the preceding claims wherein the carrier fluid has a pH in the range of 8 to 11, most preferably in the range 8.5 to 10.

12. A carrier fluid according to any one of the preceding claims wherein the carrier solution comprises less than 5% by weight of alkali or alkaline earth metal salt and the shale inhibitor is a polyvinylamides.

13. A carrier fluid according to any one of the preceding claims wherein the carrier solution comprises more than 5% by weight of alkali or alkaline earth metal salt and the shale inhibitor is an amine terminated compound of general formula H₂N-R-(OR)ₓ-NH₂; where R is a ethylene or propylene, and x is from 1 to 5.

14. A process for the introduction of gravel into a wellbore having shale-comprising formations, natural or induced fractures, highly permeable zones, filter cake disruption or combinations thereof, which process comprises introducing an aqueous carrier fluid as claimed in any one of claims 1 to 13 and gravel into the formation.

15. A process as claimed in claim 14 wherein the gravel particulates are introduced into the formation in the carrier fluid and in an amount in the range of 1 to 70% by weight (of the total weight of gravel and carrier fluid).

16. A process as claimed in claim 14 or claim 15 wherein the particle size distribution of the gravel is in the range of from 150 to 3000 microns.
